## Europäisches Patentamt

## European Patent Office

## Office européen des brevets

(19)

(11) Numéro de publication: **0 239 453**
**B1**

(12)

# FASCICULE DE BREVET EUROPEEN

(45) Date de publication du fascicule du brevet:
19.12.90

(51) Int. Cl.⁵: **H04L 1/00**

(21) Numéro de dépôt: 87400461.7

(22) Date de dépôt: 03.03.87

(54) Procédé et dispositif de transmission de données numériques par messages organisés en trames.

(30) Priorité: 06.03.86 FR 8603133

(43) Date de publication de la demande:
30.09.87 Bulletin 87/40

(45) Mention de la délivrance du brevet:
19.12.90 Bulletin 90/51

(84) Etats contractants désignés:
AT BE CH DE ES GB GR IT LI LU NL SE

(56) Documents cités:
GB-A- 2 029 170
US-A- 3 906 445

NTZ ARCHIV,
vol. 6, no. 7, juillet 1984, pages 151-158, Berlin, DE; H.D. CLAUSEN et al.: "HDLC und ähnliche Leitungskontrollverfahren für Satellitenkanäle"

(73) Titulaire: THOMSON-CSF, 51, Esplanade du Général de Gaulle, F-92800 Puteaux(FR)

(72) Inventeur: Oget, Christian, THOMSON-CSF
SCPI 19, avenue de Messine, F-75008 Paris(FR)

(74) Mandataire: Turlèque, Clotilde et al, THOMSON-CSF
SCPI, F-92045 PARIS LA DEFENSE CEDEX 67(FR)

## Description

La présente invention se rapporte au domaine de la transmission de données numériques et a plus particulièrement pour objet un procédé de transmission de ce type de données dans des messages organisés en trames, et le dispositif pour la mise en œuvre de ce procédé.

Un réseau ou une chaîne de transport de données numériques nécessite en général plusieurs supports de transmission présentant chacun des caractéristiques spécifiques: liaisons hertziennes, liaisons par fils, par fibres optiques etc...

Il est connu que les liaisons hertziennes sont entachées d'un nombre d'erreurs relativement élevé, en particulier dans certaines conditions limites, limites de portée, évanouissement dû à la mobilité ou aux conditions atmosphériques ou, plus généralement, à l'environnement, interférences, brouillages. De plus, de telles liaisons hertziennes peuvent être affectées de durées de transmission importantes, notamment dans le cas de liaisons par satellites ou de liaisons nécessitant des relais. La distribution des erreurs combine une répartition en erreurs isolées, et une répartition en paquets d'erreurs.

Par contre, les liaisons du type liaisons par fils ou par fibres optiques sont entachées de taux d'erreurs nettement plus faibles.

La présente invention a pour objet un procédé de transmission de données numériques par messages organisés en trames dont l'organisation interne s'apparente à celle décrite pour le format HDLC dans un article tiré de ntz Archiv Bd6 (1984) H.7, pages 152 et 153, c'est-à-dire distinguant les trames de commande des trames de données et dans lequel une répétition des trames non reçues peut être effectuée au bout d'une durée à ajuster pour qu'il n'y ait pas de répétition inutile, mais qu'en même temps, il n'y ait pas d'attente intempestive. Ainsi le procédé décrit dans cet article est figé et ne permet pas de s'adapter, par exemple à des variations dans la qualité de la liaison.

Le procédé selon l'invention assure la transmission de ces données pratiquement sans erreurs résiduelles et rapidement, même lorsque le réseau ou la chaîne de transport utilise des liaisons de mauvaise qualité, ou modifie la chaîne de transmission. Une telle modification ou "reconfiguration" de la chaîne de transmission se traduit en effet par des coupures, avec ou sans perte d'informations.

Pour obtenir ce résultat, le procédé de transmission de données selon l'invention est adaptable dans ses caractéristiques en fonction de la qualité de la liaison: il combine plusieurs techniques de correction et/ou de protection des transmissions, cette combinaison étant adaptée à chaque instant à la qualité de la liaison. Ces techniques connues en soi sont principalement:

- l'utilisation de codes détecteurs-correcteurs d'erreurs, les erreurs étant détectées et corrigées par auto-corrélation;
- la répétition des trames émises;
- l'entrelacement des trames émises;
- la retransmission sélective des trames mal reçues.

Mais, selon l'invention, ces différentes caractéristiques sont combinées pour obtenir à chaque instant la meilleure efficacité de transmission et la rapidité la plus grande possible compatible avec cette qualité cet instant.

Selon l'invention, le procédé de transmission de données par des messages de commande ou des messages de données constitués de trames sur des liaisons duplex entre postes émetteur-récepteur, est caractérisé

en ce qu'un poste origine en position émetteur transmet dans chaque message de commande des trames composées à partir d'un paquet d'informations comportant la nature d'une commande et les données correspondantes, et dans chaque message de données des trames composées à partir de N paquets d'informations comportant chacun un paquet de données et le numéro d'ordre associé, et en ce que la transmission de chaque message avant l'émission du message suivant par le poste origine

- donne lieu à l'émission par le poste destinataire de trames d'acquittement dans lesquelles sont retransmis, au poste origine, la nature de la commande, pour un message de commande, et les numéros des paquets de données bien reçus, pour un message de données,

et donne lieu, à la réception de ces trames d'acquittement par le poste d'origine, à la répétition du message de commande si la trame d'acquittement correspondante n'est pas reçue, et à la répétition sélective des trames composées à partir des paquets de données dont les numéros n'ont pas été détectés dans les trames d'acquittement,

en ce que chaque message est composé de $k.N$ trames élémentaires, $k$ trames élémentaires formant une super-trame, et $N$ étant la longueur des messages comptée en super-trames, chaque super-trame étant composée par entrelacement de $k_1$ trames élémentaires comportant des paquets d'informations différents, chaqune répétée $k_2$ fois, avec $k = k_1 + k_2$,

en ce que les trames d'acquittement et les messages constitués de trames d'acquittement ont les mêmes formats que, respectivement, les trames et les messages de commande et de données dont elles signalent la bonne réception,

et en ce que la décision relative à la bonne ou mauvaise réception des trames de commande et de données dans un poste destinataire et des trames d'acquittement dans le poste origine sont obtenues par un vote majoritaire sur les trames répétées pour chaque type de message.

L'invention a également pour objet un dispositif pour la mise en œuvre de ce procédé, les parties émettrice et réceptrice de ce dispositif étant facilement réalisables sous forme numérique.

L'invention sera mieux comprise et d'autres caractéristiques apparaîtront à l'aide de la description qui suit en référence aux figures annexées:

- la figure 1 représente la partie émission d'un émetteur-récepteur selon l'invention;

- la figure 2 représente la partie réception d'un émetteur-récepteur selon l'invention ;
- les figures 3, 4, 5 et 6 représentent des organigrammes qui illustrent le procédé de transmission selon l'invention.

Le dispositif de transmission selon l'invention comporte des émetteur-récepteur ayant chacun une partie émission et une partie réception. Pour une liaison donnée, un émetteur-récepteur fonctionnant en émetteur utilise sa partie émission pour envoyer les trames constituant le message, tandis qu'il utilise sa partie réception pour recevoir les trames dites d'acquittement comme expliqué ci-après. Inversement, un poste récepteur utilise sa partie réception pour recevoir les trames constituant le message attendu tandis qu'il utilise sa partie émission pour renvoyer les trames d'acquittement correspondant aux trames de messages acquises. Chacun des postes est bien entendu capable de tenir le rôle de poste émetteur ou de poste récepteur selon le sens de transmission, en liaison duplex.

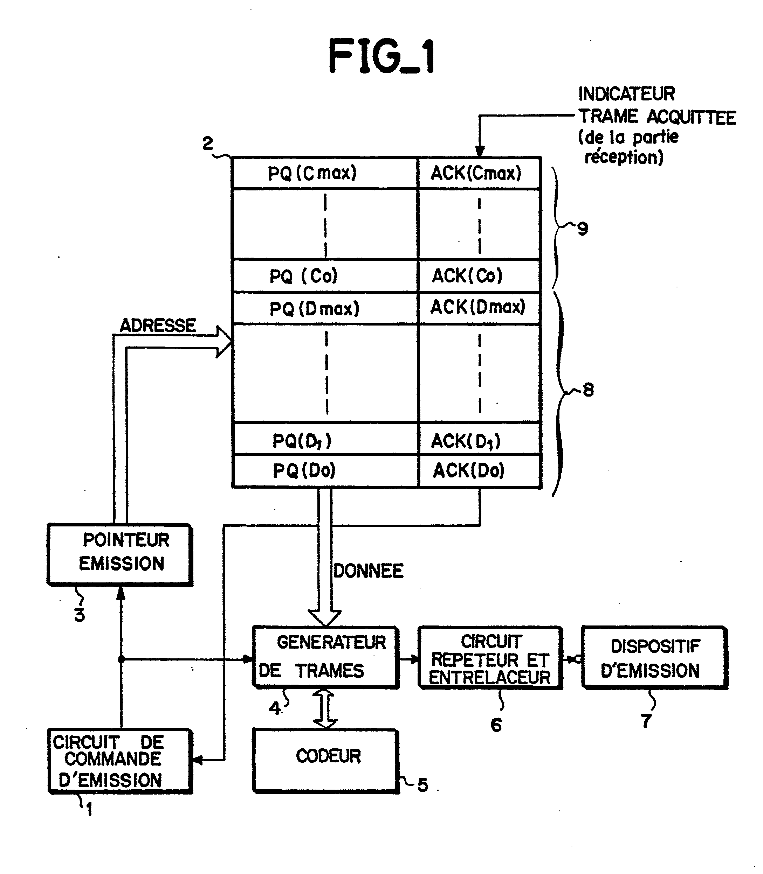

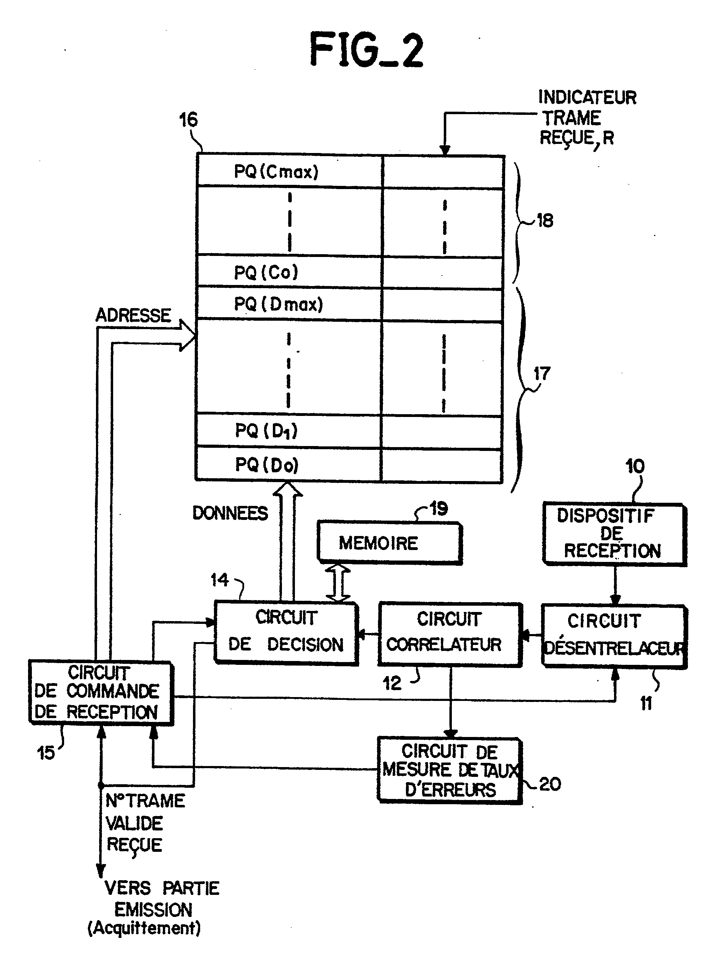

La description qui suit des figures 1 et 2 représentant respectivement les parties émission et réception des émetteur-récepteur selon l'invention permettra ultérieurement de décrire en détails le procédé de transmission de données numériques selon l'invention. L'élément central de la partie émission est un circuit de commande d'émission 1 qui gère une mémoire 2 à l'aide d'un pointeur d'adresses 3. Le circuit de commande d'émission est également relié à l'entrée de commande d'un générateur de trames 4 dont l'entrée de données est reliée à la sortie de données correspondante de la mémoire 2 ; ce générateur de trames est relié à un codeur 5 qui reçoit les données issues de la mémoire 2 par l'intermédiaire du générateur de trames et les lui restitue après codage. Les trames codées sont ensuite transmises à un circuit répéteur et entrelaceur 6 relié à la sortie du générateur de trames ; la sortie du circuit entrelaceur est reliée à un dispositif d'émission 7. Les circuits d'adaptation appropriés à la nature électrique du réseau d'émission n'ont pas été représentés.

La mémoire de données 2 est partagée en deux zones, l'une référencée 8 constitue le tampon des données à émettre, l'autre référencée 9 constitue le tampon des données de contrôle du message.

A chaque paquet de données "PQ(D$_i$)" ou de commande "PQ(C$_i$)" est associé dans cette mémoire un bit "ACK(D$_i$)" ou "ACK(C$_i$)" indiquant si le paquet considéré a été ou non "acquitté", c'est-à-dire considéré comme bien reçu, par le terminal récepteur.

Le pointeur d'émission 3 peut adresser indépendamment en lecture le champ "données" d'un paquet, et en écriture le champ "acquittement" d'un paquet.

Cet ensemble peut être réalisé à l'aide de circuits intégrés discrets, organisé en séquenceur codeur, ou à l'aide d'un calculateur ou microprocesseur exécutant un programme enregistré et recourant à ses propres ressources ou à des ressources adjointes pour assurer les fonctions codage et tramage. La mémoire peut être une mémoire à lecture et écriture simultanées, ou peut utiliser la mémoire vive du calculateur ou du microprocesseur, en temps partagé.

La figure 2 représente la partie réception d'un émetteur-récepteur selon l'invention. Un dispositif de réception 10 transmet les données détectées à un circuit désentrelaceur 11 dont la sortie est reliée à un circuit corrélateur 12. Le circuit corrélateur restitue des trames décodées qu'il transmet à un circuit de décision 14 fonctionnant suivant un principe de vote majoritaire, comme il sera expliqué ci-après. Ce circuit 14 indique les numéros des trames reçues à un circuit de commande de réception 15 qui génère et transmet à la partie émission un ordre d'envoi d'un acquittement pour ces trames. Les données décodées issues du circuit de décision sont transmises à une mémoire 16 adressée par le circuit de commande de réception 15. Cette mémoire 16 est partagée en deux zones, de la même façon que la mémoire 2 dans la partie émission, la première zone référencée 17 constitue le tampon des données reçues, l'autre référencée 18 constitue le tampon des données de commande. A chaque zone mémoire destinée à la mise en mémoire d'un paquet de données est associée une zone de 1 bit indicateur R de réception.

Le circuit de décision 14 est également relié à une mémoire annexe 19 des trames non acceptées à la première réception. Cette mémoire permet d'utiliser les trames obtenues lors d'une première réception avec celles reçues lors de la réception suivante, dans le circuit de décision 14. Le circuit de commande de réception 15 a une sortie reliée à une entrée correspondante du circuit de décision 14, pour commander s'il y a lieu une modification des conditions de décision du vote "majoritaire". Le circuit corrélateur 12 est également relié à l'entrée d'un circuit 20 de mesure du taux d'erreur dont la sortie est reliée à une entrée de commande du circuit de commande de réception 15. Ce circuit de mesure du taux d'erreur 20 reçoit des indications de correction d'erreurs du circuit corrélateur 12 et fournit au circuit de commande de réception 15 les informations nécessaires pour commander la suppression ou, au contraire, le rétablissement d'une redondance appliquée à l'émission sur les trames. Ce fonctionnement lié au procédé de transmission selon l'invention sera expliqué plus en détails ci-après.

De la même manière qu'à l'émission, la fonction réception peut être réalisée à l'aide de circuits intégrés discrets organisés en séquenceur-décodeur, ou à l'aide d'un calculateur ou microprocesseur exécutant un programme enregistré, et recourant à ses propres ressources ou à des ressources adjointes pour assurer les fonctions de détramage et de décodage.

D'une manière générale, la transmission de données d'un poste émetteur-récepteur en position d'émission vers un poste émetteur-récepteur en position réception s'effectue de la façon suivante, sur voie duplex : la connexion est établie entre les terminaux selon les protocoles usuels de signalisation, spécifiques du réseau de communication, et qui ne seront pas décrits ici. Les échanges de données entre terminaux s'effectuent par messages, chacun pouvant comporter au maximum 256 trames, les trames seront précisément définies ci-après. Chaque nouveau message ne peut être émis que si le précédent a été complètement acquitté par le destinataire, c'est-à-dire convenablement reçu par lui, sauf à interrompre puis rétablir la liaison, ou à introduire une temporisation.

Les messages sont soit des messages de commande, soit des messages de données.

Chaque message de données est constitué d'un certain nombre de trames ; chaque trame comporte un en-tête, par exemple une chaîne pseudo-aléatoire de 31 ou 32 éléments binaires dont les propriétés d'autocorrélation sont connues, cet en-tête étant suivi d'un octet comportant le numéro de la trame, puis d'un paquet de données de quatre octets. Les éléments binaires de chacun des octets du champ du numéro de trame et du champ de données sont "surcodés" à l'aide d'une chaîne pseudo-aléatoire, de sept éléments binaires par exemple, les éléments binaires 0 et 1 étant surcodés par des chaînes pseudo-aléatoires complémentaires. Le champ de données est de format constant durant la transmission et nul dans les trames d'acquittement qui ne comportent donc que l'en-tête et l'octet numéro de trame.

Pour les messages de commande, une trame est constituée de la manière suivante : le premier champ de 4 octets est l'en-tête, du même type que celui décrit ci-dessus ; le second champ, de longueur égale à un octet, a la signification de la nature de la commande : prêt pour émettre, prêt pour recevoir, demande d'authentification, message disponible, demande d'envoi d'un message, redondance de trame, etc... Le champ suivant de longueur égale à quatre octets contient les données nécessaires à la commande, par exemple le numéro des messages disponibles, le numéro du message demandé, la classe d'un abonné, le degré de redondance de trame, etc...

Les messages de commande ont une importance capitale pour le déroulement correct de la communication. En conséquence, dans un mode de réalisation préféré chaque octet ne peut véhiculer que l'une des seize combinaisons correspondant à un codage 4-8, c'est-à-dire à un codage où $2^4$ mots sont exprimés par des combinaisons de huit éléments binaires, chaque combinaison étant différente de toutes les autres avec un degré de différence ou une "distance minimale" égale à 4. Ainsi, tout risque de confusion entre les commandes est pratiquement éliminé.

Dans le mode de réalisation préféré, toutes les trames sont émises quatre fois au moins (éventuellement 8 fois) :

- Chaque trame comportant des données est émise quatre fois et entrelacée elle-même avec trois autres trames également émises quatre fois, ce qui constitue une "super-trame" de longueur égale à 16 trames.

- Pour les messages de commande, chaque trame est émise quatre fois et entrelacée trois fois avec elle-même, ce qui revient en fait à constituer, comme pour les trames de données, une "super-trame" de 16 trames, avec 16 fois la trame de commande considérée. Si le champ de données de 4 octets n'est pas totalement employé, les éléments binaires disponibles peuvent être utilisés pour véhiculer des éléments de parité qui permettront à la réception d'effectuer des détections d'erreurs après décodage.

Un message de commande est constitué d'une seule "super-trame" alors qu'un message de données peut comporter plusieurs "super-trames", au plus 16 si la longueur des messages est limitée à 256 trames.

Dans la partie émetteur, la mémoire tampon 2 est chargée avec des paquets de bits de données $PQ(D_i)$ avec $D_i = D_0 ... D_{max}$ et des paquets de bits de commande $PQ(C_i)$ avec $C_i = C_0 , ... C_{max}$ constituant le message à transmettre, et comportant au plus 256 paquets de 4 octets. Au départ, les segments ACK, qui correspondent à l'acquittement par le destinataire de chaque paquet reçu, sont vides. Dans la partie récepteur du destinataire, la mémoire tampon 16 qui comporte pour chaque trame un segment PQ, de données $D_0 , D_1 ... D_{max}$ , ou de commande $C_0 , C_1 ... C_{max}$ , et un segment R indicateur de trame reçue est vide, les segments indicateurs de trame étant à l'état 0. La communication entre deux postes émetteur-récepteur peut mettre en oeuvre un protocole qui fait appel à l'échange de messages de commande, puis d'un message de données, et enfin de messages de commande. Si d'autres données doivent être transmises, la communication se poursuit selon le même enchaînement jusqu'à l'interruption.

L'explication qui suit précise les principales phases du procédé de transmission qui sera décrit en détails et de façon plus systématique ci-après.

Lorsqu'une "super-trame" entrelacée est reçue, elle est tout d'abord désentrelacée par le circuit 11 (figure 2), puis chacune des composantes est décodée par corrélation avec correction d'erreurs dans le circuit corrélateur 12. L'en-tête constitué d'une chaîne pseudo-aléatoire de 31 ou 32 éléments binaires conduit par autocorrélation à l'acquisition du synchronisme trame. La corrélation s'effectue modulo 7 éléments binaires, le corrélateur étant ouvert pour effectuer à chaque coup d'horloge une corrélation. La corrélation est dite glissante. La trame étant de format fixe, le dispositif sait reconnaître un début de trame.

La chaîne pseudo-aléatoire de 7 éléments binaires utilisée ensuite pour le surcodage du champ numéro de trame (ou nature de la commande) et du champ de données est moins puissante en ce qui concerne la possibilité de corrections d'erreurs, mais elle permet d'augmenter le débit par rapport au cas où le même type de codage que pour l'en-tête serait utilisé. Cette relative diminution de la puissance de correction de cette seconde partie des trames est "compensée" par la répétition des trames et leur entrelacement, et par leur retransmission en cas de non réception. Cinq erreurs au maximum sont corrigées sur la chaîne pseudo-aléatoire à 31 ou 32 éléments binaires, et trois erreurs sont corrigées sur une chaîne pseudo-aléatoire à 7 éléments binaires.

Du fait que chaque trame de données est émise quatre fois, les éléments utiles extraits après décodage de la super-trame permettent de restituer les données d'origine par comparaison des résultats des quatre décodages et vote majoritaire dans le circuit de décision 14.

Les trames de commande étant, elles, émises seize fois, les résultats des quatre premiers votes peuvent subir en cascade une seconde comparaison et un second vote majoritaire 2/4. Lorsqu'une trame est reconnue valide, le paquet de données est rangé dans la mémoire à l'adresse déduite du numéro de trame, et le segment indicateur de trame reçu correspondant, R, est placé à l'état 1. Simultanément, cette partie réception du poste transmet un ordre à la partie émission pour envoi vers le poste d'origine d'une trame acquittement porteuse du numéro de la trame reçue et acceptée.

Les trames acquittement ne comportent que les en-têtes et des indications de numéro ; les trames étant de formant constant, les cinq octets des champs "numéro" et "données" sont utilisés pour véhiculer cinq fois le numéro de la trame acquittée. Cette disposition augmente la probabilité de réception de cette trame d'acquittement par comparaison et vote majoritaire 2/5 dans chaque trame à la réception, dans la partie réception du terminal d'origine. Il en est de même des trames acquittant les trames de commande. Le poste d'origine prend acte des acquittements en forçant l'indicateur de trame acquittée ACK à l'état 1 ; cet indicateur, empêche l'émission ultérieure de ces trames acquittées, donc déjà bien reçues par le terminal destinataire.

Les trames non acquittées, c'est-à-dire celles pour lesquelles un test par le circuit de commande d'émission sur l'indicateur ACK montre qu'elles n'ont pas été bien reçues par le terminal destinataire, sont réémises sélectivement en fin de première émission du message, et ce jusqu'à l'acquittement ou, le cas échéant, à l'issue d'une durée prédéterminée fixée par une temporisation.

Les trames de commande transportent des informations permettant d'effectuer un contrôle de validité portant sur l'ensemble du message : les paquets de données de commande de ces trames $C_0$ , $C_1$ ... $C_{max}$ sont stockés dans la partie 9 de la mémoire tampon du circuit d'émission et dans la partie 18 de la mémoire tampon du circuit de réception où ils sont utilisés pour décider de l'acceptation ou du rejet d'un message ; ces données constituent donc un échelon global de détection d'erreur.

Une fois la transmission du message effectuée, que le message de données ait été accepté ou rejeté, les terminaux sont à nouveau prêts pour échanger des messages de commande, et la transmission éventuelle d'un message de donnée est reprise de la manière indiquée ci-dessus.

Le circuit de mesure de taux d'erreurs 20 relié à une sortie du circuit corrélateur 12 dans la partie réception compte le nombre d'erreurs détectées et corrigées par le circuit de corrélation 12, ce qui donne une mesure de la qualité de la liaison :

- Si la liaison est de bonne qualité, c'est-à-dire que le nombre d'erreurs détectées reste inférieur à un certain seuil, et que cette qualité est relativement stationnaire, le terminal destinataire envoie, intercalé entre deux super-trames d'acquittement de données, un message de commande de la diminution ou de la suppression de la redondance de trame dans le terminal émetteur.

- Si au contraire, la qualité de la liaison se dégrade, le terminal destinataire envoie de la même manière, entre deux "super-trames" un message de commande pour que la redondance de trames soit rétablie.

Comme tout autre message, le message de commande sera acquitté par le terminal émetteur s'il est bien reçu par lui, et l'acquittement est prévu avec indication de la modification ou non de la redondance.

Le circuit de décision du terminal récepteur, qui, comme indiqué ci-dessus, fonctionne par comparaison des différentes trames décodées répétées, et vote majoritaire, a un taux de décision adaptable. Le niveau nécessaire à l'obtention d'un acquittement par le vote majoritaire est variable en fonction du taux de redondance introduit dans la liaison, c'est-à-dire du nombre de répétitions d'une trame. Lors d'une modification de la redondance dans le terminal émetteur, suite à un changement de qualité de la liaison, le terminal destinataire adapte donc son vote majoritaire dans le circuit de décision 14. Les trames de données et les trames de commande peuvent être alternées, comme indiqué ci-dessus ; pour les particulariser les en-têtes de trame sont des chaînes pseudo-aléatoires à 31 ou 32 éléments binaires complémentaires.

Le circuit à mémoire 19 garde en mémoire les trames reçues et décodées non acceptées par le circuit de décision lors d'une première réception. Ce circuit à mémoire permet de ne pas perdre le bénéfice des informations reçues lors de la première réception, ce qui permet de réduire le nombre de répétitions nécessaires, et de diminuer la proportion de trames considérées comme correctes à recevoir lors d'une seconde répétition : par exemple, lors d'une première réception, avec une redondance d'ordre 4, c'est-à-dire où chaque trame est transmise quatre fois, le circuit de décision met en oeuvre un vote majoritaire de type 2/4, c'est-à-dire que la trame est considérée comme bien reçue lorsque deux trames sur quatre sont identiques. Lorsqu'une telle trame est considérée comme mal reçue, c'est-à-dire qu'il n'y a pas deux paquets de données identiques dans les quatre répétitions d'une trame donnée, ces trames décodées sont gardées en mémoire dans la mémoire 19, et les trames reçues lors d'une seconde répétition, soit quatre trames, sont utilisées avec les quatre anciennes trames décodées reçues. Le circuit de décision peut alors considérer comme bien reçue une trame détectée trois fois dans les huit trames au total répétées. La puissance du procédé de transmission est ainsi augmentée.

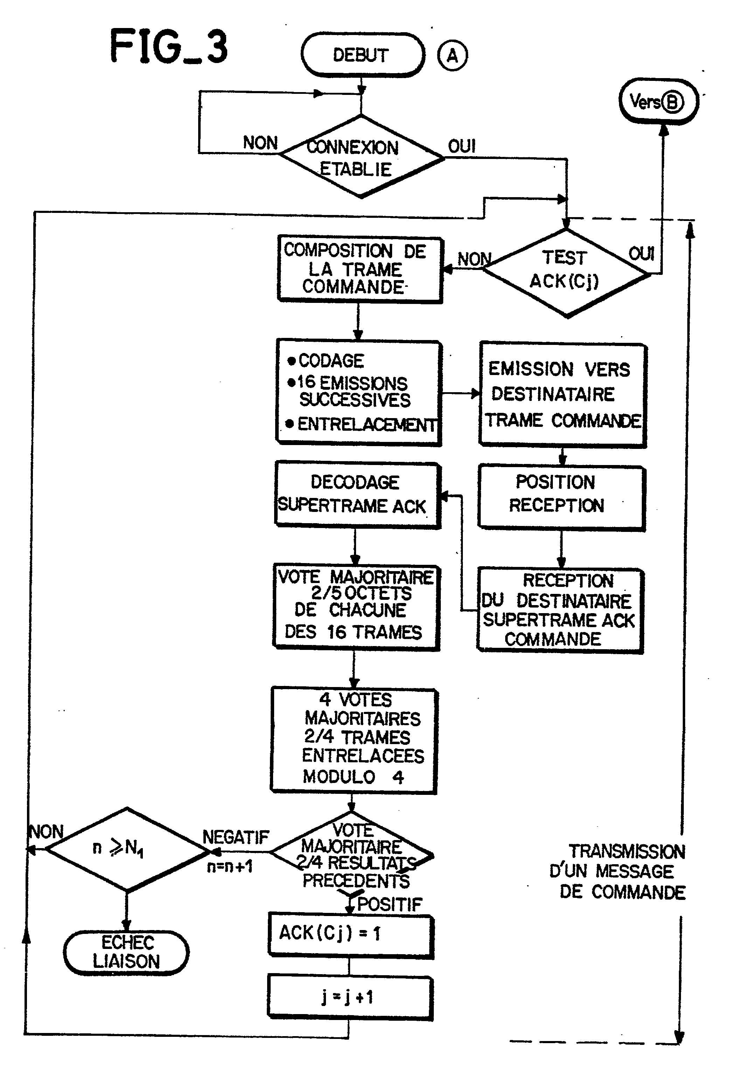

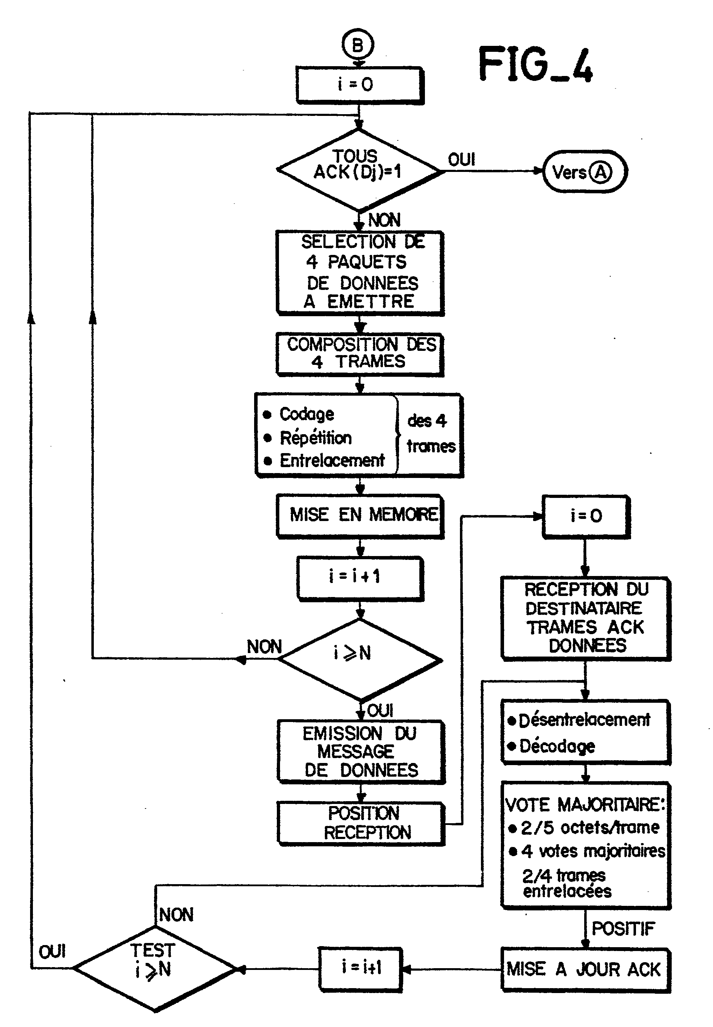

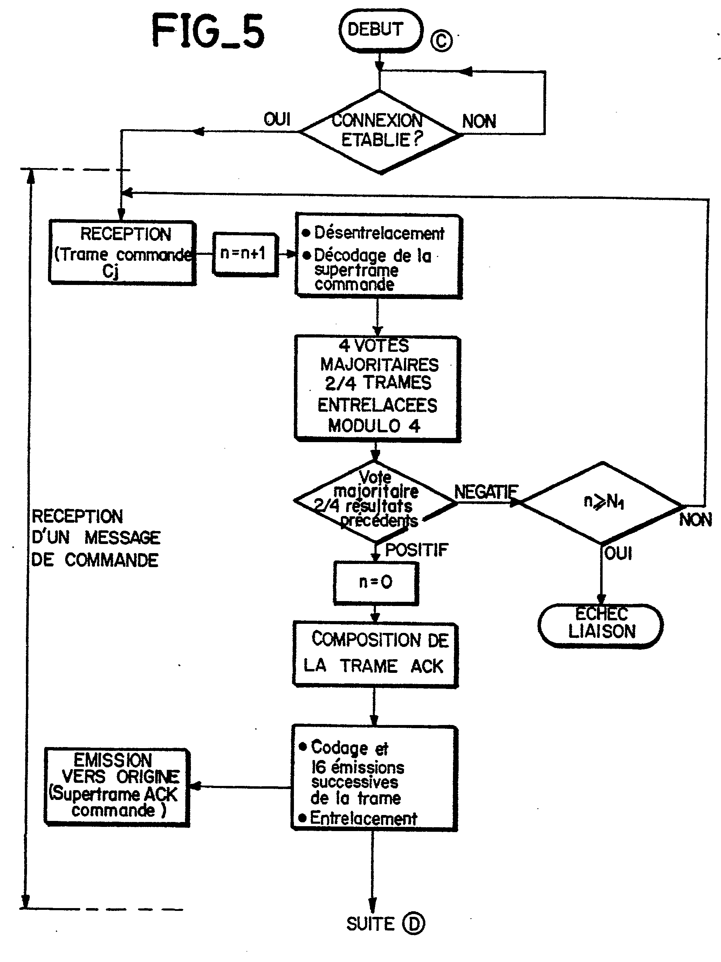

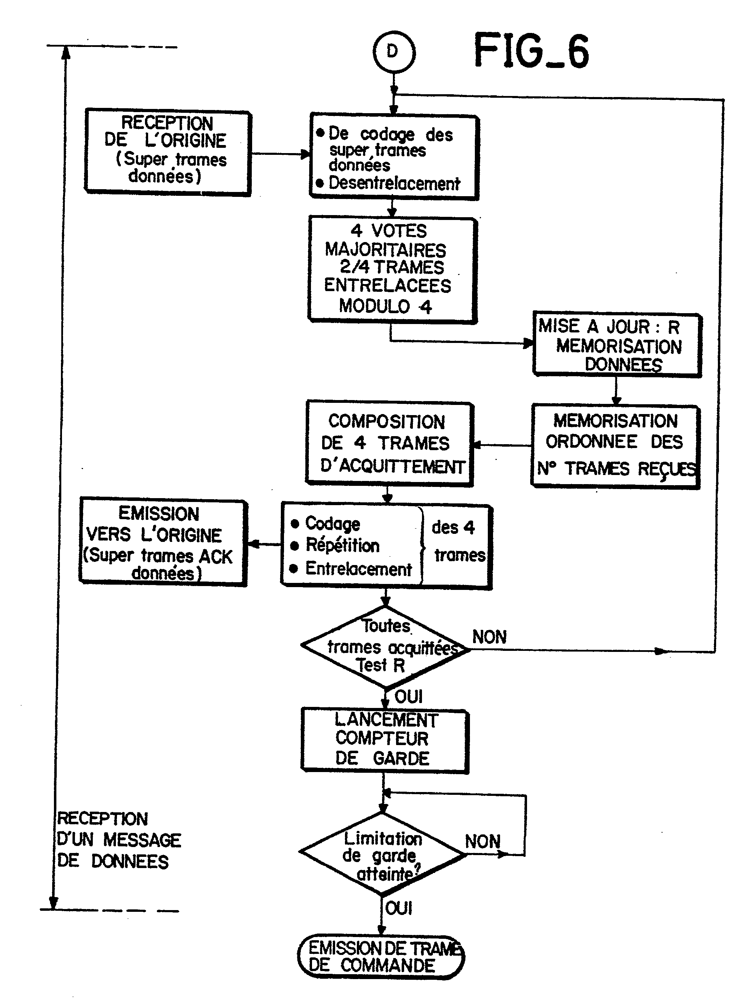

Le procédé de transmission selon l'invention qui met en oeuvre un émetteur-récepteur du type décrit en référence aux figures 1 et 2, va être décrit plus en détails ci-après, en référence aux figures 3 et 4 qui représentent les organigrammes de gestion d'un poste, pour l'émission respectivement d'un message de commande, puis d'un message de données, par un poste en position émission, et en référence aux figures 5 et 6 qui représentent les organigrammes de gestion d'un poste en position réception pour la réception d'un message de commande, puis d'un message de données et l'émission des trames d'acquittement correspondantes.

Le séquencement d'un circuit séquenceur ou la programmation d'un calculateur ou d'un microprocesseur suivant ces organigrammes est à la portée de l'homme de l'art.

La procédure d'établissement de la liaison entre ces deux postes, poste origine et poste destinataire, selon les protocoles usuels de signalisation, n'a pas été détaillée.

Une fois la connexion entre ces deux postes établie, la transmission proprement dite des messages de commande et des messages de données peut commencer. Le premier type de message envoyé par le poste origine, figure 3, est un message de commande constitué d'une "super-trame". Pour décider de son émission un test sur le bit d'acquittement $ACK(C_j)$ du premier message de commande j = 0 est effectué. Le résultat de ce test étant négatif, la première phase est la composition de la trame de commande selon le modèle indiqué ci-dessus, avec un en-tête, l'octet relatif à la nature de la commande, et les octets de données de cette commande formant le paquet de données de commande $C_j$ (le premier étant $C_0$) à transmettre. La deuxième phase, toujours dans le poste origine, consiste alors à sur-coder cette trame, à la répéter 16 fois, à entrelacer ces 16 trames, puis à commander l'émission de la "super-trame" ainsi constituée et formant le message de commande au poste destinataire en position réception.

Le poste récepteur reçoit la "super-trame" de commande, figure 5. Lors de cette première réception un index n initialement à zéro est mis à 1 par l'opérateur n = n+1. Le récepteur effectue, après la réception, le désentrelacement puis le décodage des champs codés. Il effectue ensuite une succession de 4 votes majoritaires 2/4, par groupe de quatre trames décodées, une trame étant dans un premier temps considérée comme correcte si elle apparaît deux fois dans chaque groupe de quatre trames. Puis un cinquième vote majoritaire 2/4 est effectué, à partir des quatre résultats précédents :

- si le résultat du cinquième vote est positif, la trame de commande est considérée comme bien reçue, l'index n est remis à 0, et une trame d'acquittement est composée dans le poste destinataire. Cette trame comporte l'en-tête et répète la nature de la commande sur cinq octets, aucune donnée n'étant à transmettre dans ce type de trame. Cette trame est codée puis répétée 16 fois et entrelacée pour former une "super-trame" d'acquittement qui est alors transmise au poste origine.

- si le résultat du cinquième vote est négatif la trame de commande n'est pas correctement reçue. Un test est alors effectué sur la durée de la temporisation par un test sur une valeur $N_1$, nombre limite de répétitions d'un message de commande avant interruption. L'index n, qui subit une itération à chaque nouvelle réception d'un message de commande, est testé par rapport à $N_1$.

-- Si n est inférieur à $N_1$, la durée de la temporisation n'est pas dépassée et le poste destinataire reste en position réception. Le poste émetteur n'ayant pas reçu de trame d'acquittement, la même trame de commande sera réémise comme décrit ci-après, jusqu'à ce qu'une trame d'acquittement soit reçue par le poste origine, ou que le test sur la durée de la temporisation fasse apparaître un dépassement.

-- lorsque cette durée est dépassée, n supérieur ou égal à $N_1$, la liaison aboutit à un échec.

Dans le poste émetteur, la trame d'acquittement est reçue, puis désentrelacée, décodée, et dans chacune des trames élémentaires d'acquittement un vote majoritaire 2/5 est effectué sur le champ nature de la commande répété sur cinq octets. Puis, les octets retenus dans les 16 trames font l'objet, par groupe de quatre, de votes majoritaires 2/4. Un dernier test est alors effectué sur les résultats de ces quatre votes, par un dernier vote majoritaire 2/4 :

- si le résultat est positif, le message de commande bien reçu et correctement acquitté permet la mise à jour du bit d'acquittement $ACK(C_j)$ correspondant dans la partie 9 de la mémoire 2, et le message de commande suivant, ou un message données, peut alors être émis ;

- si le résultat de ce dernier test est négatif, le message ne peut pas être acquitté, un test sur la durée de temporisation est alors effectué au moyen de l'index n comme dans le poste destinataire ; cet index n est testé par rapport au nombre $N_1$ nombre limite de répétitions du message, et cet index n subit une itération, n = n+1, à chaque nouvelle émission d'un message de commande.

-- Si n est inférieur à $N_1$, la durée limite n'est pas dépassée et l'émission du même message de commande selon le même processus est réengagée.

-- par contre, si n est supérieur ou égal à $N_1$, on aboutit comme précédemment dans le poste destinataire à un échec de la liaison.

A la suite de l'émission du premier message de commande, on peut soit réémettre un autre message de commande avec $PQ(C_{j+1})$ (vers A) ou un message de données (vers B).

L'émission de message de données est effectuée de la manière suivante décrite en référence aux figures 4 et 6 respectivement relatives au poste origine du message de données et au poste destinataire correspondant.

Tout d'abord dans le poste origine, un test sur les bits d'acquittement ACK des paquets de données conduit à l'extraction des quatre premiers champs de données à émettre, non encore acquis par le poste destinataire. Les quatre trames de données correspondantes sont composées selon le modèle indiqué ci-dessus avec le champ en-tête, le champ numéro de trame d'un octet, et le champ de données de quatre octets. Ces quatre trames sont alors codées, répétées quatre fois, puis entrelacées pour former une "super-trame" de données. Si N est la longueur du message de données à émettre, comptée en nombre de "super-trames", un index i initialement à zéro est mis à 1, par i = i+1 pour cette première "super-trame" prête à émettre, puis un test est réalisé sur la valeur i par rapport à N :

- si i est inférieur à N, alors le circuit de gestion commande la composition d'une autre "super-trame" de la même manière que ci-dessus en recherchant les quatre champs de données qui suivent non encore acquittés.

- Si i est égal à N, alors le message de données est complet et son émission vers le destinataire est commandée.

Le poste origine est alors placé en position réception, pour la réception des trames d'acquittement relatives aux messages de données transmis, qui vont être générés par le poste destinataire.

Dans ce dernier, comme le montre la figure 6, après désentrelacement et décodage des "supertrames" du message de données, un vote majoritaire 2/4 au niveau du circuit de décision 14 du poste destinataire, pour chaque groupe de quatre trames correspondant à la répétition d'une même trame, conduit à la mémorisation des paquets de données bien reçus parmi les quatre trames de chaque "super-trame", et à la mise à jour dans la mémoire 16 des indicateurs de trame reçus R correspondant. Les numéros des trames bien reçues sont mis en mémoire en vue de leur émission par l'intermédiaire des trames d'acquittement.

Ces trames d'acquittement de données sont constituées de la même manière que les trames de données elles-mêmes mais chaque numéro de trame est répété cinq fois, comme pour les trames d'acquittement des messages de commande. L'émission de la trame d'acquittement correspondante étant réalisée, le poste destinataire réalise un test sur l'état des indicateurs de trames reçues R pour savoir si toutes les trames ont été acquittées. Si ce n'est pas le cas le poste destinataire se replace en position réception, en attente de la réémission des trames de données qui n'ont pas été correctement reçues (vers D).

- Si par contre toutes les trames ont bien été acquittées, un compteur dit "de garde" est lancé pour maintenir le poste en position d'attente de réception, pour le cas où des trames d'acquittement n'auraient pas été bien reçues par le poste origine, et que les trames de données correspondantes seraient réémises. Un test sur la durée du comptage est effectué jusqu'à ce que la valeur limite soit atteinte.

L'émission d'une trame de commande peut alors être engagée, si la transmission des données contenues dans les premiers messages de données, et éventuellement réémises en cas de mauvaise réception, est terminée.

Pendant cette durée de garde, les trames d'acquittement émises par le poste destinataire sont reçues par le poste origine. Elles sont désentrelacées puis décodées (voir figure 4). Pour chacune des trames d'acquittement élémentaires un vote majoritaire 2/5 sur les cinq octets de chacune d'entre elles est effectué. Puis les résultats de ces votes majoritaires subissent un autre vote majoritaire 2/4 pour utiliser la répétition sur quatre trames des numéros de trames acquittées. Ce test conduit à la mise en mémoire ordonnée des numéros de trames acquittées, les indicateurs ACK correspondant changeant d'état pour chacune d'entre elles. Un index i est émis à un, puis subit une itération pour chaque "super-trame" d'acquittement de données reçue, et un test sur la valeur de cet index par rapport à la longueur du message de données N comptées en "super-trames" est effectué.

- Si toutes les "super-trames" d'acquittement de données n'ont pas été reçues, c'est-à-dire si i est inférieur à N, le poste origine est replacé en position réception des "super-trames" d'acquittement de données. Si par contre i est égal à N, alors le système est remis en position test sur les bits indicateurs de trames acquittées ACK du message correspondant pour savoir si toutes les données ont bien été reçues. Si certains des bits d'acquittement n'ont pas été mis à jour, les trames de données correspondantes n'ont pas été bien reçues, et le poste émetteur réémet les trames non encore acquittées, en revenant à l'étape de composition des trames non encore acquittées. Par contre, si toutes les trames ont été acquittées, le poste origine peut alors commander l'émission des trames de commande qui font suite à l'émission d'un message de données (vers A).

Dans la description précise indiquée ci-dessus, les fonctions auxiliaires permettant d'augmenter le débit, par exemple en supprimant la répétition des trames lorsque la liaison est considérée de bonne qualité, ou au contraire de la réintroduire lorsque la qualité de la liaison se détériore n'ont pas été décrites dans les organigrammes des figures 4 à 6. Il est cependant à la portée de l'homme de l'art de les introduire dans ces schémas.

L'invention n'est pas limitée au mode de réalisation précisément décrit et représenté. En particulier, dans la description du procédé selon l'invention, la répétition des trames a été indiquée comme effectuée sur la base d'un entrelacement d'ordre 4, chaque trame étant répétée quatre fois, puis cet ensemble de quatre trames étant entrelacé. L'ordre d'entrelacement peut être différent, en particulier il est possible de réaliser une répétition des trames avec un entrelacement d'ordre 8.

**Revendications**

1. Procédé de transmission de données par des messages de commande ou des messages de données constitués de trames sur des liaisons duplex entre postes émetteur-récepteur, caractérisé en ce qu'un poste origine en position émetteur transmet dans chaque message de commande des trames composées à partir d'un paquet d'informations comportant la nature d'une commande et les données correspondantes, et dans chaque message de données des trames composées à partir de N paquets d'informations comportant chacun un paquet de données et le numéro d'ordre associé, et en ce que la transmission de chaque message avant l'émission du message suivant par le poste origine
– donne lieu à l'émission par le poste destinataire de trames d'acquittement dans lesquelles sont retransmis, au poste origine, la nature de la commande, pour un message de commande, et les numéros des paquets de données bien reçus, pour un message de données,
– et donne lieu, à la réception de ces trames d'acquittement par le poste d'origine, à la répétition du message de commande si la trame d'acquittement correspondante n'est pas reçue, et à la répétition sélective des trames composées à partir des paquets de données dont les numéros n'ont pas été détectés dans les trames d'acquittement

en ce que chaque message est composé de k.N trames élémentaires, k trames élémentaires formant une super-trame, et N étant la longueur des messages comptée en super-trames, chaque super-trame étant composée par entrelacement de $k_1$ trames élémentaires comportant des paquets d'informations différents, chaque répétée $k_2$ fois, avec $k = k_1 + k_2$,

en ce que les trames d'acquittement et les messages constitués de trames d'acquittement ont les mêmes formats que, respectivement, les trames et les messages de commande et de données dont elles signalent la bonne réception,

et en ce que la décision relative à la bonne ou mauvaise réception des trames de commande et de données dans un poste destinataire et des trames d'acquittement dans le poste origine sont obtenues par un vote majoritaire sur les trames répétés pour chaque type de message.

2. Procédé selon la revendication 1, caractérisé en ce que les messages de commande ne comportent qu'un seul paquet d'informations, $k_1 = 1$, répété $k = k_2 = 16$ fois, et en ce que les messages de données comportent $K_1 = 4$ paquets d'informations répétés $k_2 = 4$ fois avant entrelacement, les super-trames ayant la même longueur quel que soit le type de messages transmis.

3. Procédé selon la revendication 1, caractérisé en ce que la nature de la commande ou le numéro d'un paquet de données sont respectivement répétés, dans les trames d'acquittement, sur toute la longueur allouée à un paquet d'informations dans une trame de commande ou de données.

4. Procédé selon l'une quelconque des revendications 1 à 3, caractérisé en ce que chaque trame comporte un en-tête ayant des propriétés de correction par auto-corrélation et en ce que le paquet d'informations qui suit l'en-tête est codé par un codage correcteur d'erreurs par corrélation.

5. Procédé selon la revendication 4, caractérisé en ce que l'en-tête est constitué d'une séquence pseudo-aléatoire de longueur égale à 4 octets, à un élément binaire près, de caractéristiques d'auto-corrélation autorisant jusqu'à 6 corrections d'erreurs, le paquet d'informations codé comportant un octet pour la nature de la commande ou le numéro d'un paquet de données, et 4 octets pour les données de commande ou le paquet de données.

6. Procédé selon la revendication 5, caractérisé en ce que la nature des trames, commande et données, est signifiée par l'utilisation de séquences pseudo-aléatoires d'en-tête différentes.

7. Procédé selon l'une des revendications 4, 5 ou 6, caractérisé en ce que le codage correcteur d'erreus appliqué aux paquets d'information est un codage par expansion par une séquence pseudo-aléatoire de 7 éléments binaires, le décodage par corrélation à la réception autorisant jusqu'à 3 corrections d'erreur.

8. Procédé selon la revendication 5, caractérisé en ce que les octets relatifs à la nature des commandes sont précodés, chaque octet ne pouvant être, avant codage, que l'un des 16 octets choisis dans les $2^8$ octets possibles, chacun étant différent de tous les autres par au moins 4 éléments binaires.

9. Procédé selon la revendication 8, caractérisé en ce que les données de commande sont précodées comme l'octet nature de la commande.

10. Procédé selon la revendication 4, caractérisé en ce qu'une mesure de qualité de la liaison est effectuée à la réception dans le poste destinataire par comptage des erreurs détectées et corrigées par corrélation.

11. Procédé selon la revendication 10, caractérisé en ce que le nombre de répétition $k_2$ des informations émises est modifé en fonction de la mesure de la qualité de la liaison, ce nombre étant diminué lorsque la liaison est de très bonne qualité et ramené à une valeur plus élevée lorsque la qualité de la liaison se dégrade.

12. Procédé selon la revendication 1, caractérisé en ce que les paquets d'informations considérés comme mal reçus à la réception dans le poste destinataire sont mis en mémoire et utilisés avec les trames reçues après répétition, les conditions du vote majoritaire étant alors modifiées en conséquence.

13. Dispositif de transmission de données, par messages constitués de trames, constitué de postes émetteur-récepteur destinés à fonctionner en duplex, caractérisé en ce que chaque poste comporte:

   – dans sa partie émetteur un circuit de commande d'émission (1), une mémoire (2), pour la mise en mémoire des paquets d'informations à émettre dans les trames et pour la mise en mémoire d'un indicateur d'acquittement associé à chacun de ces paquets, dont l'entrée d'adresses est couplée à une sortie du circuit de commande, un générateur de trames (4) commandé par le circuit de commande (1) et relié à la sortie de données de la mémoire (2), le générateur ayant sa sortie reliée à un circuit de répétition et d'entrelacement (6) lui-même relié à un dispositif d'émission (7), le générateur de trames étant également couplé à un circuit codeur (5),

   – dans sa partie récepteur un dispositif de réception (10) relié à un circuit désentrelaceur (11) lui-même relié à un circuit corrélateur (12) dont la sortie de données est reliée à un circuit de décision (14) fonctionnant par vote majoritaire, la sortie de données validées du circuit de décision étant reliée à l'entrée de données d'une mémoire (16) pour la mise en mémoire de paquets d'informations bien reçus et pour la mise en mémoire d'un indicateur de réception associé à chacun de ces paquets, et un circuit de commande de réception (15) pour la gestion des circuits de cette partie réception.

14. Dispositif selon la revendication 13, caractérisé en ce qu'il comporte en outre dans la partie récepteur un circuit de mesure de taux d'erreurs (20) couplé à une sortie du circuit corrélateur (12), et dont la sortie est reliée à une entrée du circuit de commande de réception (15), pour la mesure de la qualité de la liaison.

15. Dispositif selon l'une des revendications 13 et 14, caractérisé en ce qu'il comporte en outre, dans la partie réception une mémoire supplémentaire (19), pour la mise en mémoire des paquets d'information estimés mal reçus, couplé à une sortie de données supplémentaires du circuit de décision (14).

## Claims

1. A method for the transmission of data by frame-organized instruction messages or data messages via duplex links between transmitter-receiver stations, characterized in that in each instruction message, a source station acting as transmitter transmits frames which are composed of an information string containing the kind of an instruction and the corresponding data, and in each data message, a source station transmits frames containing N information strings comprising each a string of data and the associated order number, and that the transmission of each message, prior to the transmission of the next-following message by the transmitter,

- gives rise to the transmission of receipt frames by the station of destination in which the kind of the instruction in case of an instruction message, and the numbers of the data strings which have been properly received in case of a data message are retransmitted to the source station,
- and gives rise, when the source station receives these receipt frames, to the repetition of the instruction message, if the corresponding receipt frame has not been received, and to the selective repetition of the frames containing data frames, whose numbers have not been detected in the receipt frames,

in that each message is composed of $k \cdot N$ elementary frames, with k elementary frames forming a superframe and N being the length of the message counted in terms of superframes, each superframe consisting of $k_1$ interlaced elementary frames comprising different information strings, each being repeated $k_2$-times, with $k = k_1 + k_2$,

in that the messages and the message frames constituted of receipt frames have the same formats as respectively the frames and the instruction and data messages whose proper reception they indicate,

and in that the decision relative to the proper or improper reception of the instruction and data frames in the station of destination, and of the receipt frames in the source station are obtained by a majority vote on the frames repeated for each type of message.

2. A method according to claim 1, characterized in that the instruction messages comprise only a single information string ($k_1 = 1$), repeated $k = k_2 = 16$ times, and that the data messages comprise $k_1 = 4$ information strings, repeated $k_2 = 4$ times before interlacing, with the superframes having the same length irrespective of the type of the transmitted messages.

3. A method according to claim 1, characterized in that the kind of the instruction or the number of a data string are respectively repeated in the receipt frames along the entire length allocated to an information string in an instruction frame or in a data frame.

4. A method according to anyone of claims 1 to 3, characterized in that each frame comprises a head portion having correction properties by way of autocorrelation, and that the information string following the head portion is encoded by means of a correlation-based error correction code.

5. A method according to claim 4, characterized in that the head portion is constituted of a pseudo-random sequence having a length equal to four octets less one bit and presenting autocorrelation features authorizing up to six error corrections, the encoded information string comprising one octet concerning the kind of the instruction or the number of a data string, and four octets concerning the instruction data or the data string.

6. A method according to claim 5, characterized in that the kind of the frames, instruction or data, is indicated by the use of different pseudo-random sequences in the head portion.

7. A method according to anyone of claims 4 to 6, characterized in that the error correction code applied to the information strings is an expansion code using a pseudo-random sequence of seven bits, with the decoding by correlation authorizing up to three error corrections at the reception.

8. A method according to claim 5, characterized in that the octets relative to the kind of the instructions are pre-encoded, each octet being allowed prior to encoding to consist of one of 16 octets selected among the $2^8$ possible octets, and each selected octet differring from all the others by at least four bits.

9. A method according to claim 8, characterized in that the instruction data are pre-encoded in the same manner as the octet relative to the kind of instruction.

10. A method according to claim 4, characterized in that a measurement of the quality of the transmission link is performed at the reception of messages by the station of destination by way of counting the errors detected and corrected by correlation.

11. A method according to claim 10, characterized in that the number of repetitions $k_2$ of the transmitted informations is modified according to the quality measurement of the link, said number being reduced when the link is of a very high quality, but increased when the quality of the link decreases.

12. A method according to claim 1, characterized in that the information strings considered as having been improperly received in the station of destination are stored and used with frames received during subsequent repetitions, the conditions of the majority vote being modified consequently.

13. A device for transmitting data by way of frame-organized messages, constituted of transmitter-receiver stations adapted to operate in duplex mode, characterized in that each station comprises:

- in its transmitter part a transmit instruction circuit (1), a memory (2) for storing information strings to be transmitted in the frames and for storing a receipt indicator associated with each of said strings, whose address input is connected to an output of the instruction circuit, a frame generator (4) controlled by the instruction circuit (1) and connected to the data output of the memory (2), the generator having its output connected to a repetition and interlacing circuit (6) in turn connected to a transmit device (7), with the frame generator being further connected to an encoder circuit (5),
- in its receiver part a reception device (10) connected to a disinterlacing circuit (11) in turn connected to a correlation circuit (12), whose data output is connected to a decision circuit (14) operating by way of a majority vote, the output of the decision circuit for the validated data being connected to the data input of a memory (16) for storing properly received information strings and for storing a reception indicator associated to each of the strings, and a reception control circuit (15) for the management of the circuits of this receiver part.

14. A device according to claim 13, characterized in that it further comprises in its receiver part a circuit (20) for measuring the the error rate coupled to a correlation circuit (12) output, and whose output is connected to an input of the reception control circuit (15) for measuring the quality of the link.

15. A device according to one of claims 13 and 14, characterized in that it further comprises in its receiver part an additional memory (19) for storing information strings considered as having improperly been received, which is coupled to an additional data output of the decision circuit (14).

**Patentansprüche**

1. Verfahren zur Übertragung von in Rahmen strukturierten Daten als Steuernachrichten oder Datennachrichten über Duplexverbindungen zwischen Sender-Empfängerstationen, dadurch gekennzeichnet, daß eine Ursprungsstation als Sender in jeder Steuernachricht Rahmen übermittelt, die aus einem Informationspaket bestehen, das die Art der Steuerung und die entsprechenden Daten aufweist, und in jeder Datennachricht Rahmen übermittelt, die aus N Informationspaketen bestehen, die je ein Datenpaket und die zugeordnete Ordnungsnummer aufweisen, und daß die Übertragung jeder Nachricht vor der Aussendung der nachfolgenden Nachricht durch die Ursprungsstation
- die Aussendung von Quittungsrahmen durch die Zielstation auslöst, in denen die Art der Steuerung bei einer Steuernachricht und die Nummern der ordnungsgemäß empfangenen Pakete bei Datennachrichten an die Ursprungsstation rückübermittelt werden,
- und beim Empfang der Quittungsrahmen durch die Ursprungsstation die Wiederholung der Steuernachricht im Fall, daß der entsprechende Quittungsrahmen nicht empfangen wird, und die selektive Wiederholung der Rahmen auslöst, die aus den Datenpaketen bestehen, deren Nummern in den Quittungsrahmen nicht aufgefunden worden sind, daß jede Nachricht aus k.N Elementarrahmen besteht, wobei k Elementarrahmen einen Superrahmen bilden und N die Länge der in Superrahmen gezählten Nachrichten ist und wobei jeder Superrahmen aus der Verschachtelung von $k_1$ Elementarrahmen besteht, die verschiedene Informationspakete aufweisen und je $k_2$-mal wiederholt werden (mit $k = k_1 + k_2$),
daß die Quittungsrahmen und die aus Quittungsrahmen bestehenden Nachrichten jeweils das gleiche Format besitzen wie die Rahmen bzw. die Steuer- und Datennachrichten, deren ordnungsgemäßen Empfang sie melden,
und daß die Entscheidung bezüglich des ordnungsgemäßen oder fehlerhaften Empfangs der Steuer- und der Datenrahmen in einer Zielstation und der Quittungsrahmen in der Ursprungsstation bei jeder Nachrichtenart durch ein Mehrheitsvotum über die wiederholten Rahmen erfolgt.

2. Verfahren nach Anspruch 1, dadurch gekennzeichnet, daß die Steuernachrichten nur ein einziges Informationspaket aufweisen ($k_1 = 1$), das $k = k_2$ 16-mal wiederholt wird, und daß die Datennachrichten $K_1 = 4$ Informationspakete aufweisen, die $k_2 = 4$-mal vor der Verschachtelung wiederholt werden, wobei die Superrahmen unabhängig von der Art der übertragenden Nachrichten stets die gleiche Länge besitzen.

3. Verfahren nach Anspruch 1, dadurch gekennzeichnet, daß die Steuerart oder die Nummer eines Datenpakets in den Quittungsrahmen über die gesamte Länge wiederholt werden, die einem Informationspaket in einem Steuer- oder Datenrahmen zugeteilt ist.

4. Verfahren nach einem beliebigen der Ansprüche 1 bis 3, dadurch gekennzeichnet, daß jeder Rahmen einen Kopfteil mit Eigenschaften der Korrektur durch Autokorrelation aufweist und daß das auf den Kopfteil folgende Informationspaket durch einen Fehlerkorrekturkode auf Korrelationsbasis kodiert ist.

5. Verfahren nach Anspruch 4, dadurch gekennzeichnet, daß der Kopfteil aus einer Pseudozufallsfolge mit einer Länge von vier Oktetten minus ein Binärelement besteht, wobei die Autokorrelationsmerkmale die Korrektur von bis zu sechs Fehlern zulassen und das kodierte Informationspaket ein Oktett zur Kennzeichnung der Steuerart oder der Nummer eines Datenpakets und vier Oktette für die Steuerdaten oder das Datenpaket aufweist.

6. Verfahren nach Anspruch 5, dadurch gekennzeichnet, daß die Art der Rahmen, Steuerungen und Daten, durch Verwendung unterschiedlicher Pseudozufallsfolgen im Kopfteil angezeigt wird.

7. Verfahren nach einem der Ansprüche 4, 5 und 6, dadurch gekennzeichnet, daß der auf die Informationspakete angewandte Fehlerkorrekturkode ein Expansionskode mittels einer Pseudozufallsfolge von sieben Binärelementen ist, wobei die Dekodierung durch Korrelation beim Empfang die Korrektur von bis zu drei Fehlern zuläßt.

8. Verfahren nach Anspruch 5, dadurch gekennzeichnet, daß die die Befehlsart betreffenden Oktette vorkodiert sind, wobei jedes Oktett vor der Kodierung nur eines der 16 aus $2^8$ möglichen Oktetten ausgewählten Oktette ist und jedes ausgewählte Oktett sich von allen anderen in mindestens vier Binärelementen unterscheidet.

9. Verfahren nach Anspruch 8, dadurch gekennzeichnet, daß die Steuerdaten wie das artbezeichnende Oktett der Steuerung vorkodiert sind.

10. Verfahren nach Anspruch 4, dadurch gekennzeichnet, daß bei Empfang in der Zielstation eine Messung der Qualität der Leitungsverbindung durch Zählen der erfaßten und durch Korrelation verbesserten Fehler erfolgt.

11. Verfahren nach Anspruch 10, dadurch gekennzeichnet, daß die Anzahl $k_2$ der Wiederholungen der ausgesendeten Informationen in Abhängigkeit von der Messung der Verbindungsqualität geändert wird, wobei diese Anzahl verringert wird, wenn die Verbindung von sehr hoher Qualität ist, aber auf einen höheren Wert eingestellt wird, wenn die Verbindungsqualität sich verschlechtert.

12. Verfahren nach Anspruch 1, dadurch gekennzeichnet, daß die in der Zielstation als fehlerhaft empfangen betrachteten Informationspakete gespeichert und mit den nach Wiederholung empfangenen Rahmen verwendet werden, wobei dann die Bedingungen des Mehrheitsvotums entsprechend geändert werden.

13. Einrichtung zur Übertragung von Daten mittels in Rahmen strukturierten Nachrichten, wobei die Einrichtung aus Sender-Empfängerstationen im Duplexbetrieb besteht, dadurch gekennzeichnet, daß jede Station folgende Komponenten aufweist:
— im Sendeteil einen Sendesteuerkreis (1), einen Speicher (2) zum Speichern von in Rahmen zu übertragenden Informationspaketen und zum Speichern eines jedem dieser Pakete zugeordneten Quittungsindikators, wobei der Adreßeingang des Speichers an einen Ausgang des Steuerkreises angeschlossen ist, einen Rahmengenerator (4), der vom Steuerkreis (1) gesteuert wird und an den Datenausgang des Speichers (2) angeschlossen ist, wobei der Generator mit seinem Ausgang an einen Wiederholungs- und Verschachtelungskreis (6) angeschlossen ist, der seinerseits mit einer Sendeeinrichtung (7) verbunden ist, und wobei der Rahmengenerator außerdem an einen Kodierkreis (5) angeschlossen ist,
— im Empfangsteil eine Empfangseinrichtung (10), die mit einem Entschachtelungskreis (11) verbunden ist, der seinerseits an einen Korrelationskreis (12) angeschlossen ist, dessen Datenausgang mit einem auf der Basis eines Mehrheitsvotums arbeitenden Entscheidungskreis verbunden ist, wobei der Ausgang für freigegebene Daten des Entscheidungskreises an einen Dateneingang eines Speichers (16) zum Speichern von ordnungsgemäß empfangenen Informationspaketen und zum Speichern eines mit jedem dieser Pakete verbundenen Empfangsindikators angeschlossen ist, wobei der Empfangsteil außerdem einen Empfangssteuerkreis (15) zur Verwaltung der Kreise dieses Empfangsteils aufweist.

14. Einrichtung nach Anspruch 13, dadurch gekennzeichnet, daß sie weiter im Empfangsteil einen Kreis zur Messung der Fehlerrate (20) aufweist, der an den Ausgang des Korrelationskreises (12) angeschlossen ist und dessen Ausgang an einen Eingang des Empfangssteuerkreises (15) zur Messung der Verbindungsqualität angeschlossen ist.

15. Einrichtung nach einem der Ansprüche 13 und 14, dadurch gekennzeichnet, daß sie weiter im Empfangsteil einen Zusatzspeicher (19) zum Speichern von nicht als ordnungsgemäß empfangen betrachteten Informationspaketen aufweist, der an einen Zusatzdatenausgang des Entscheidungskreises (14) angeschlossen ist.

# FIG_1

# FIG_2

EP 0 239 453 B1

# FIG_3

DEBUT — (A)

Vers (B)

CONNEXION ETABLIE — NON / OUI

COMPOSITION DE LA TRAME COMMANDE — NON ← TEST ACK(Cj) → OUI

- CODAGE
- 16 EMISSIONS SUCCESSIVES
- ENTRELACEMENT

EMISSION VERS DESTINATAIRE TRAME COMMANDE

DECODAGE SUPERTRAME ACK

POSITION RECEPTION

VOTE MAJORITAIRE 2/5 OCTETS DE CHACUNE DES 16 TRAMES

RECEPTION DU DESTINATAIRE SUPERTRAME ACK COMMANDE

4 VOTES MAJORITAIRES 2/4 TRAMES ENTRELACEES MODULO 4

NON — n ⩾ N₁ — NEGATIF / n=n+1 — VOTE MAJORITAIRE 2/4 RESULTATS PRECEDENTS — POSITIF

ECHEC LIAISON

ACK(Cj) = 1

j = j+1

TRANSMISSION D'UN MESSAGE DE COMMANDE

# FIG_4

# FIG_5

DEBUT ©

CONNEXION ETABLIE ?
OUI / NON

RECEPTION D'UN MESSAGE DE COMMANDE

RECEPTION (Trame commande Cj)

n=n+1

- Désentrelacement
- Décodage de la supertrame commande

4 VOTES MAJORITAIRES 2/4 TRAMES ENTRELACEES MODULO 4

Vote majoritaire 2/4 résultats précédents
NEGATIF / POSITIF

$n \geqslant N_1$
NON / OUI

ECHEC LIAISON

n=0

COMPOSITION DE LA TRAME ACK

- Codage et 16 émissions successives de la trame
- Entrelacement

EMISSION VERS ORIGINE (Supertrame ACK commande)

SUITE ⒹD

# FIG_6

(D)

RECEPTION DE L'ORIGINE (Super trames données)

- De codage des super trames données
- Desentrelacement

4 VOTES MAJORITAIRES 2/4 TRAMES ENTRELACEES MODULO 4

MISE A JOUR : R MEMORISATION DONNEES

MEMORISATION ORDONNEE DES N° TRAMES REÇUES

COMPOSITION DE 4 TRAMES D'ACQUITTEMENT

EMISSION VERS L'ORIGINE (Super trames ACK données)

- Codage
- Répétition
- Entrelacement

des 4 trames

Toutes trames acquittées Test R — NON

OUI

LANCEMENT COMPTEUR DE GARDE

RECEPTION D'UN MESSAGE DE DONNEES

Limitation de garde atteinte? — NON

OUI

EMISSION DE TRAME DE COMMANDE